(19) Europäisches Patentamt
European Patent Office
Office européen des brevets

(11) **EP 2 116 868 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**01.06.2016 Patentblatt 2016/22**

(45) Hinweis auf die Patenterteilung:
**08.08.2012 Patentblatt 2012/32**

(21) Anmeldenummer: **09005355.4**

(22) Anmeldetag: **15.04.2009**

(51) Int Cl.:
***G01S 17/10*** *(2006.01)*

(54) **Optischer Sensor**

Optical sensor

Capteur optique

(84) Benannte Vertragsstaaten:
**AT CH DE ES FR GB IT LI**

(30) Priorität: **07.05.2008 DE 102008022599**

(43) Veröffentlichungstag der Anmeldung:
**11.11.2009 Patentblatt 2009/46**

(73) Patentinhaber: **Leuze electronic GmbH + Co. KG**
**73277 Owen/Teck (DE)**

(72) Erfinder: **Karaduman, Metin**
**73278 Schlierbach (DE)**

(74) Vertreter: **Ruckh, Rainer Gerhard**
**Jurastrasse 1**
**73087 Bad Boll (DE)**

(56) Entgegenhaltungen:
**DE-A1- 10 025 968**    **JP-A- H11 183 618**
**US-A- 4 464 048**    **US-A- 5 574 552**
**US-A- 5 644 261**

EP 2 116 868 B2

**Beschreibung**

Die Erfindung betrifft einen optischen Sensor gemäß dem Wortlaut des Anspruchs 1.

Derartige optische Sensoren bilden nach dem Impuls-Laufzeit-Verfahren arbeitende Distanzsensoren. Zur Bestimmung der Objektdistanz eines zu detektierenden Objekts wird vom Sender des optischen Sensors ein Lichtimpuls ausgesendet, der vom Objekt zurückreflektiert wird und dadurch zum Empfänger des optischen Sensors geführt wird. Aus der Laufzeit des Lichtimpulses vom Sender zum Objekt und zurück zum Empfänger wird die Objektdistanz berechnet.

Optische Sensoren der in Rede stehenden Art weisen zur Bestimmung der Laufzeiten analoge Auswerteschaltungen, so genannte Time to analog Konverter auf. Derartige Auswerteschaltungen weisen ein kapazitives Element, insbesondere einen Kondensator auf, dessen Ladevorgänge über Schaltmittel gesteuert werden. Sobald vom Sender ein Lichtimpuls emittiert wird, werden die Schaltmittel zum ersten Mal betätigt. Dies kann dadurch erfolgen, dass die Ausgangsspannung des Senders mit einem Schwellwert bewertet wird. Sobald der Sender einen Lichtimpuls emittiert, liegt die Ausgangsspannung oberhalb des Schwellwerts. Dadurch werden die Schaltmittel betätigt, wodurch ein Ladevorgang des kapazitiven Elements, insbesondere ein Aufladen des Kondensators gestartet wird. Der Ladevorgang wird beendet, sobald der Lichtimpuls am Empfänger registriert wird. Auch hier wird bevorzugt die Ausgangsspannung des Empfängers mit einem Schwellwert bewertet. Sobald die Ausgangsspannung oberhalb des Schwellwerts liegt, werden die Schaltmittel erneut betätigt und der Ladevorgang dadurch gestoppt.

Je nach Objektdistanz variiert die Laufzeit des Lichtimpulses und damit die Dauer des Ladevorgangs des kapazitiven Elements. Damit liefert die im kapazitiven Element durch den Ladevorgang generierte Messspannung ein direktes Maß für die Laufzeit des Lichtimpulses und damit für die Objektdistanz.

Problematisch hierbei ist jedoch, dass bedingt durch Temperatureffekte und Alterungen von Bauteilen die als Maß für die Objektdistanz ausgewertete Messspannung Schwankungen und Veränderungen unterworfen ist, die die Genauigkeit der Distanzmessung erheblich einschränken.

Die US 4 464 048 A betrifft eine Distanzmessvorrichtung, die als Sender einen Laser aufweist, der in einer vorgegebenen zeitlichen Folge Lichtimpulse emittiert. Als Empfänger ist eine Avalanche-Photodiode vorgesehen. Die Distanzmessung erfolgt nach dem Laufzeitprinzip, das heißt es wird die Zeit gemessen, die ein vom Sender emittierter Lichtimpuls zu einem Objekt und zurück zum Empfänger benötigt. Zur Durchführung der Laufzeitmessung ist eine Auswerteschaltung vorgesehen, die Schaltmittel zur Vorgabe des Starts und Endes der Laufzeitmessung sowie ein kapazitives Element aufweisen, wobei der Ladevorgang des kapazitiven Elements zur Laufzeitmessung genutzt wird.

Die US 5 644 261 A betrifft eine Vorrichtung zum Testen von integrierten Schaltkreisen. Mit der Vorrichtung wird das Zeitverhalten des integrierten Schaltkreises getestet. Hierzu umfasst die Vorrichtung eine Einheit zur Generierung eines Clock-Signals und einen Interpolator, der Triggersignale für die Testung generiert.

Der Erfindung liegt die Aufgabe zugrunde, einen optischen Sensor der eingangs genannten Art bereitzustellen, welcher bei geringem konstruktiven Aufwand eine verbesserte Messgenauigkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor umfasst einen Lichtimpulse emittierenden Sender, einen Lichtimpulse empfangenden Empfänger und eine Auswerteschaltung, mittels derer aus der Laufzeit eines Lichtimpulses zu einem zu detektierenden Objekt die Distanz zu diesem Objekt bestimmt wird. Die Auswerteschaltung weist Schaltmittel und ein kapazitives Element auf. Bei Emittieren eines Lichtimpulses werden die Schaltmittel betätigt und lösen einen Ladevorgang des kapazitiven Elements aus. Dieser Ladevorgang wird durch erneutes Betätigen des Schaltmittels beendet. Die durch diesen Ladevorgang erhaltene Messspannung wird als Maß für die Objektdistanz ausgewertet. Die Auswerteschaltung (8) weist einen Taktgeber zur Vorgabe von Referenzzeiten auf, wobei der Taktgeber von einem Quarzoszillator gebildet ist, der als Systemtakt eine periodische Folge von Pulsen generiert, wobei die Referenzzeiten ganzzahlige Vielfache der Periode des Systemtakts sind. Nach Bestimmen der die Laufzeit repräsentierenden Messspannung durch erste Betätigungen der Schaltmittel ein Ladevorgang des kapazitiven Elements für eine erste durch den Taktgeber vorgegebene Referenzzeit, die kleiner als die Laufzeit ist, durchgeführt wird, wodurch eine erste Referenzspannung erhalten wird.

Durch zweite Betätigungen der Schaltmittel wird ein Ladevorgang des kapazitiven Elements für eine zweite durch den Taktgeber vorgegebene Referenzzeit, die größer als die Laufzeit ist, durchgeführt, wobei die Differenz der ersten Referenzzeit und der Laufzeit sowie der zweiten Referenzzeit und der Laufzeit kleiner sind als eine Periode des Systemtakts. Durch Interpolation der Referenzzeiten und Referenzspannungen wird für die Messspannung der genaue Wert der Laufzeit bestimmt.

Der Grundgedanke der Erfindung besteht somit darin, nach der Messung zur Bestimmung der Laufzeit eines Lichtimpulses zu einem Objekt und zurück zum optischen Sensor zwei Kalibriermessungen durchzuführen, wobei durch den Bezug der Laufzeitmessung auf die Kalibriermessungen externe Störeinflüsse auf die Auswerteschaltung, insbesondere bedingt durch Temperaturdriften oder Alterungen von Bauteilen, systematisch eliminiert werden können, wodurch eine signifikante Erhöhung der Genauigkeit der Distanzmessung erhalten wird.

Wesentlich hierbei ist, dass bei den Kalibriermessungen jeweils für eine exakt durch den Taktgeber vorgegebene und damit bekannte Referenzzeit ein Ladevorgang des kapazitiven Elements durchgeführt wird. Die durch den Taktgeber vorgegebenen Referenzzeiten sind dabei unabhängig von Temperaturdriften und Abmessungen von Bauelementen der Auswerteschaltung und stellen somit einen exakten, unveränderten Maßstab für die Kalibriermessungen dar.

Die Referenzzeiten sind erfindungsgemäß so gewählt, dass eine Referenzzeit kleiner, die andere Referenzzeit größer als die bestimmte Laufzeit ist. Die Referenzzeiten werden hierzu rechnergesteuert unmittelbar, nachdem die Laufzeit durch die Messspannung am kapazitiven Element gemessen wurde, in geeigneter Weise vorgegeben.

Dann kann durch Interpolation der Referenzzeiten und der bei den Kalibriermessungen am kapazitiven Element erhaltenen Referenzspannung der genaue Wert der Laufzeit ermittelt werden.

Die Kalibrierung der Laufzeit-Messwerte erfordert als zusätzliches Bauteil lediglich einen Taktgeber, der bevorzugt von einem Quarzoszillator gebildet ist. Die Kalibrierung kann somit mit einem äußerst geringen konstruktiven Aufwand durchgeführt werden.

Generell kann für eine Distanzmessung ein einzelner Lichtimpuls herangezogen werden. Zur weiteren Erhöhung der Messgenauigkeit können mehrere Lichtimpulse für eine Distanzmessung herangezogen werden, wobei diese für ein sukzessives Aufladen des das kapazitive Element bildenden Kondensators sorgen. Die Kalibriermessungen können für die Mehrfach-Puls-LaufzeitMessungen entsprechend durchgeführt werden.

Der Empfänger des optischen Sensors ist bevorzugt von einer Avalanche-Photodiode gebildet. Um mit diesem Empfänger Objekte unterschiedlicher Reflektivität in unterschiedlichen Distanzen sicher erfassen zu können, ist der Arbeitspunkt der Avalanche-Photodiode in geeigneter Weise einzustellen. Der Arbeitspunkt wird dabei bevorzugt dicht unter der Durchbruchspannung, etwa 10 % unter der Durchbruchspannung, gewählt. Die Bestimmung der Durchbruchspannung erfolgt bevorzugt während der beiden Kalibriermessungen.

Während dieser Kalibriermessungen ist bevorzugt der Sender ausgeschaltet, so dass zur Ermittlung der Durchbruchspannung die Rauschspannung der Avalanche-Photodiode bei fortlaufend erhöhter Eingangsspannung erfasst wird. Vorteilhaft hierbei ist, dass hierzu bereits im optischen Sensor vorhandene Schaltungskomponenten zur Distanzmessung genutzt werden können, so dass der konstruktive Aufwand zur Bestimmung gering gehalten werden kann.

Die Erfindung wird im Folgenden anhand der Zeichnungen erläutert. Es zeigen:

Figur 1: Schematische Darstellung eines optischen Sensors.

Figur 2: Analoger Teil der Auswerteschaltung des optischen Sensors gemäß Figur 1.

Figur 3: Zeitdiagramme für die Durchführung der Distanzmessung mit dem optischen Sensor gemäß Figur 1.

Figur 4: Spannungszeit-Diagramm für die Zeitmessung gemäß Figur 3.

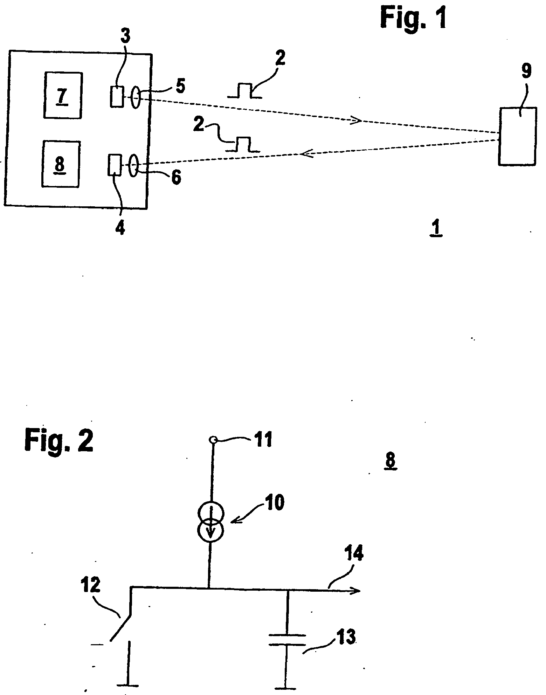

Figur 1 zeigt schematisch den Aufbau eines Ausführungsbeispiels des erfindungsgemäßen optischen Sensors 1. Der optische Sensor 1 bildet einen nach dem Impuls-Laufzeit-Verfahren arbeitenden Distanzsensor. Der optische Sensor 1 weist einen Lichtimpulse 2 emittierenden Sender 3 auf, der von einer Laserdiode gebildet ist. Der optische Sensor 1 weist weiterhin einen Lichtimpulse 2 empfangenden Empfänger 4 in Form einer Avalanche-Photodiode auf. Dem Sender 3 ist eine Sendeoptik 5, dem Empfänger 4 eine Empfangsoptik 6 zugeordnet. Der Sender 3 wird von einer Steuereinheit 7 angesteuert. Die im Empfänger 4 generierten Ausgangssignale werden in einer Auswerteschaltung 8 ausgewertet. Als gemeinsamer. Bestandteil der Steuereinheit 7 und der Auswerteschaltung 8 ist eine nicht gesondert dargestellte Rechnereinheit vorgesehen. Zumindest Komponenten der Steuereinheit 7 und der Auswerteschaltung 8 sind auf einem ASIC implementiert.

Zur Bestimmung der Distanz eines Objekts 9 zum optischen Sensor 1 emittiert der Sender 3 Lichtimpulse 2 mit vorgegebenen Pulslängen. Zur Distanzbestimmung wird jeweils die Laufzeit eines Lichtimpulses 2 vom Sender 3 zum Objekt 9 und zurück zum Empfänger 4 ausgewertet.

Figur 2 zeigt die analogen Komponenten der Auswerteschaltung 8 zur Durchführung der Distanzmessungen. Die Auswerteschaltung 8 weist eine spannungsgesteuerte Stromquelle 10 auf, die über einen Eingang 11 an die Rechnereinheit angeschlossen ist, so dass über die Rechnereinheit die Spannung der Stromquelle 10 vorgebbar ist. Weiterhin weist die Auswerteschaltung 8 als Schaltmittel einen Schalter 12 sowie als kapazitives Element einen Kondensator 13 auf. Mittels des Kondensators 13 wird eine Messspannung generiert, die über eine Leitung 14 einem vorzugsweise in der Rechnereinheit integrierten Analog-Digital-Wandler zugeführt wird. Die Messspannung wird in der Rechnereinheit zur Ermittlung der Objektdistanz ausgewertet.

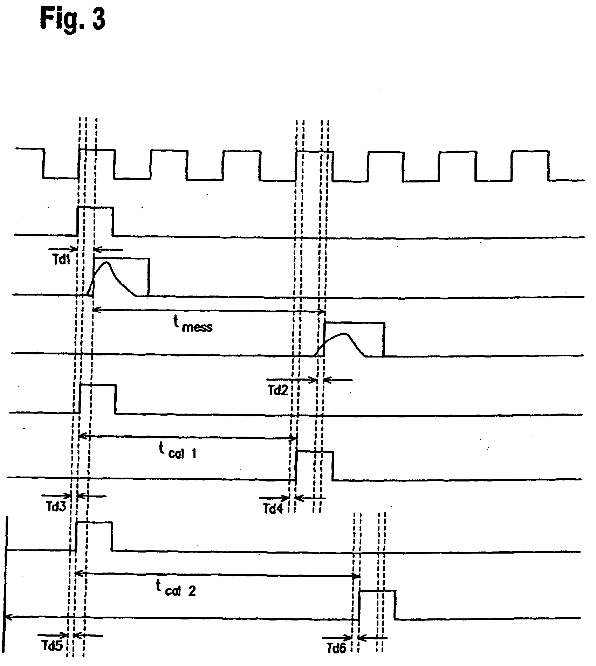

Die mit dem optischen Sensor 1 durchgeführten Zeitmessungen sind in den Zeitdiagrammen von Figur 3 veranschaulicht. Das erste (oberste) Diagramm zeigt einen Systemtakt in Form einer Folge von periodischen Pulsen, die in einem Taktgeber erzeugt werden. Der Taktgeber ist im vorliegenden Fall von einem in der Rechnereinheit integrierten Quarzoszillator gebildet. Mit einem Puls des Systemtakts (zweites Diagramm in Figur 3) wird der Sender 3 aktiviert, so dass dieser einen Lichtimpuls 2 emittiert (drittes Diagramm in Figur 3). Die Emission des Lichtimpulses 2 erfolgt bedingt durch bauteilbedingte Verzögerungen um eine Zeit $T_{d1}$ verzögert zu dem Puls des Systemtakts.

Der vom Sender 3 emittierte Lichtimpuls 2 wird auf das zu detektierende Objekt 9 gerührt und von dort zurück zum Empfänger 4 geführt. Das durch den auftreffenden Lichtimpuls 2 am Empfänger 4 generierte Ausgangssignal ist im vierten Diagramm dargestellt. Dieses pulsförmige Signal ist bedingt durch die Laufzeit des Lichtimpulses 2 zum Objekt 9 um eine in der Auswerteschaltung 8 gemessene Zeit $t_{mess}$ verzögert. Der Start- und Endzeitpunkt wird definiert durch eine Schwellwerteinheit, die bevorzugt in der Rechnereinheit integriert ist. Mit der Rechnereinheit wird ein Schwellwert generiert, mittels dessen der vom Sender 3 emittierte Lichtimpuls 2 (das heißt die entsprechende Spannung des Senders 3) und das in Form einer Ausgangsspannung vorliegende Ausgangssignal des Empfängers 4 bewertet wird.

Sobald der vom Sender 3 emittierte Lichtimpuls 2 den Schwellwert überschreitet, wird der Schalter 12 in der Auswerteschaltung 8 gemäß Figur 2 geöffnet und der Kondensator 13 lädt sich auf. Sobald das Ausgangssignal des Empfängers 4 den Schwellwert überschreitet, wird der Schalter 12 geschlossen, der Ladevorgang des Kondensators 13 wird dadurch beendet. Da der Schalter 12 erst bei Überschreiten des Schwellwerts geschlossen ist, wird die Laufzeitmessung nicht sofort mit Beginn der Registrierung des Lichtimpulses 2 beendet, sondern um eine Zeit $T_{d2}$ verzögert. Der Grad der Aufladung des Kondensators 13 und damit die Messspannung $U_{mess}$, die über die Leitung 14 in die Rechnereinheit eingegeben wird, definiert die Messzeit $t_{mess}$ zwischen dem vom Sender 3 emittierten Lichtimpuls 2 und dem Empfang des Lichtimpulses 2 am Empfänger 4, das heißt die Zeit $t_{mess}$ spiegelt die Laufzeit des Lichtimpulses 2 zum Objekt 9 wieder.

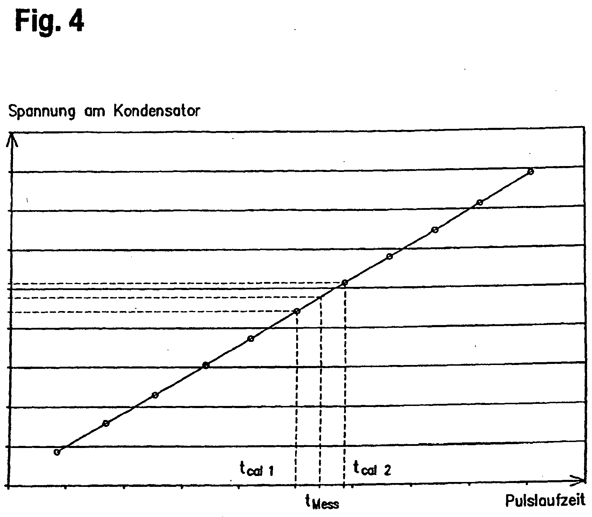

Aufgrund von Temperaturdriften und Bauteilalterungen ist die gemessene Zeit $t_{mess}$ mit systembedingten Ungenauigkeiten behaftet. Um diese zu eliminieren werden unmittelbar nach der Objektdetektion durch Emission eines Lichtimpulses 2 (drittes und viertes Diagramm in Figur 3) eine erste Kalibriermessung (fünftes und sechstes Diagramm in Figur 3) und eine zweite Kalibriermessung (siebtes und achtes Diagramm in Figur 4) durchgeführt. Während der Kalibriermessungen ist der Sender 3 abgeschaltet. Die Kalibriermessungen werden jeweils für eine durch den Systemtakt des Quarzoszillators fest vorgegebene Referenzzeit ($t_{cal1}$, $t_{cal2}$) durchgeführt. Diese Referenzzeiten betragen jeweils ganzzahlige Vielfache der Periode des Systemtakts. Dabei ist, wie aus dem fünften und sechsten Diagramm von Figur 3 ersichtlich, die Referenzzeit $t_{cal1}$ kürzer als die gemessene Zeit $t_{mess}$. Weiterhin ist, wie aus dem siebten und achten Diagramm von Figur 3 ersichtlich, die Referenzzeit $t_{cal2}$ größer als die gemessene Zeit $t_{mess}$. Dabei sind die Differenzen $t_{cal2} - t_{mess}$ beziehungsweise $t_{mess} - t_{cal1}$ kleiner als die Periodendauer des Systemtakts.

Bei jeder Kalibriermessung wird durch einen ersten Puls des Systemtakts (als Beginn des Zeitintervalls $t_{cal1}$ beziehungsweise $t_{cal2}$) der Schalter 12 der Auswerteschaltung 8 geöffnet, wobei das Öffnen des Schalters 12 mit einer Zeit $t_{d3}$ (beziehungsweise $t_{d5}$) verzögert zum Puls des Systemtakts erfolgt. Entsprechend wird das Zeitintervall $t_{cal1}$, $t_{cal2}$ durch Schließen des Schalters 12 beendet, wobei auch dieses Schließen durch einen Puls des Systemtakts ausgelöst wird, wobei der Zeitpunkt des Schließens um eine Zeit $t_{d4}$ (beziehungsweise $t_{d6}$) bezüglich dem Puls des Systemtakts verzögert ist.

Zu Beginn des Zeitintervalls $t_{cal1}$ beziehungsweise $t_{cal2}$ wird durch Öffnen des Schalters 12 über den Strom der Stromquelle 10 der Kondensator 13 aufgeladen.

Durch Schließen des Schalters 12 wird der Ladevorgang des Kondensators 13 beendet. Durch diese Ladevorgänge während $t_{cal1}$, $t_{cal2}$ werden Referenzspannungen $U_{cal1}$, $U_{cal2}$ erhalten, die über die Leitung 14 der Rechnereinheit zugeführt werden.

Anhand der Referenzspannungen $U_{cal1}$, $U_{cal2}$ und der Referenzzeiten $t_{cal1}$, $t_{cal2}$ erfolgt eine genaue Bestimmung der gemessenen Zeit $t_{mess}$. Die gemessene Zeit $t_{mess}$ ergibt sich dabei aus den genannten Größen gemäß der folgenden Beziehung:

$$t_{mess} = (t_{cal2} - t_{cal1}) \cdot U_{mess}/(U_{cal2} - U_{cal1}) + (U_{cal2} \cdot t_{cal1} - U_{cal1} \cdot t_{cal2})/(U_{cal2} - U_{cal1})$$

Diese Bestimmung der gemessenen Zeit $t_{mess}$ ist in Figur 4 veranschaulicht, die die am Kondensator 13 der Auswerteschaltung 8 erhaltenen Spannungen nach den einzelnen Ladevorgängen in Abhängigkeit der Laufzeiten zeigt. Wie aus Figur 4 ersichtlich, wird $t_{mess}$ dadurch bestimmt, dass entsprechend der Lage der Messspannung $U_{mess}$ zwischen den Referenzspannungen $U_{cal1}$, $U_{cal2}$ auch $t_{mess}$ im Intervall zwischen $t_{cal1}$ und $t_{cal2}$ bestimmte wird.

Die so bestimmte Messzeit $t_{mess}$ bildet die Laufzeit des Lichtimpulses 2 vom Sender 3 zum Objekt 9 und von dort zurück zum Empfänger 4. Durch die Kalibrierung mittels der beiden Kalibriermessungen ist die Laufzeit unabhängig von Störgrößen wie Temperaturdriften oder Alterungen von Bauteilen der Auswerteschaltung 8. Aus der so ermittelten Laufzeit wird in der Rechnereinheit die Objektdistanz berechnet und dann als Ausgangsgröße des optischen Sensors 1 ausgegeben.

Wie aus dem Diagramm in Figur 4 ersichtlich, ist die Spannung am Kondensator 13, die durch einen Ladevorgang erhalten wird, umso größer, desto größer die Pulslaufzeit, das heißt die Dauer des Ladevorgangs ist.

4

Mit dem optischen Sensor 1 müssen Objekte 9 mit unterschiedlicher Reflektivität und in verschiedenen Distanzen gleichermaßen zuverlässig detektiert werden. Um dies zu erreichen, ist es wesentlich, einen optimierten Arbeitspunkt der den Empfänger 4 bildenden Avalanche-Photodiode einzustellen. Vorteilhaft liegt der Arbeitspunkt etwa 10 % unterhalb der Durchbruchspannung der Avalanche-Photodiode. Um diese Arbeitspunkteinstellung vornehmen zu können, muss die Durchbruchspannung bestimmt werden.

Die Bestimmung der Durchbruchspannung der Avalanche-Photodiode erfolgt während der Kalibriermessung. Während dieser Kalibriermessung ist der Sender 3 ausgeschaltet. Zur Bestimmung der Durchbruchsspannung wird die Eingangsspannung der Avalanche-Photodiode schrittweise erhöht. Dabei wird fortlaufend die Ausgangsspannung der Avalanche-Photodiode, die dem Rauschen derAvalanche-Photodiode entspricht, gemessen und mit dem in der Schwellwerteinheit generierten Schwellwert verglichen. Mit einem vorzugsweise in der Rechnereinheit implementierten Zähler werden die Schwellwertüberschreitungen gezählt. Die Durchbruchspannung der Avalanche-Photodiode ist dann erreicht, wenn im Zähler eine vorgegebene Anzahl von Schwellwertüberschreitungen registriert wird.

Bezugszeichenliste

(1)    Optischer Sensor
(2)    Lichtimpuls
(3)    Sender
(4)    Empfänger
(5)    Sendeoptik
(6)    Empfangsoptik
(7)    Steuereinheit
(8)    Auswerteschaltung
(9)    Objekt
(10)    Stromquelle
(11)    Eingang
(12)    Schalter
(13)    Kondensator
(14)    Leitung

**Patentansprüche**

1.    Optischer Sensor mit einem Lichtimpulse emittierenden Sender, einem Lichtimpulse empfangenden Empfänger und einer Auswerteschaltung, mittels derer aus der Laufzeit eines Lichtimpulses zu einem zu detektierenden Objekt die Distanz zu diesem Objekt bestimmt wird, wobei die Auswerteschaltung Schaltmittel und ein kapazitives Element aufweist, wobei bei Emittieren eines Lichtimpulses die Schaltmittel betätigt werden und einen Ladevorgang des kapazitiven Elements auslösen und dieser Ladevorgang durch erneutes Betätigen des Schaltmittels beendet wird, und wobei die durch diesen Ladevorgang erhaltene Messspannung als Maß für die Objektdistanz ausgewertet wird, **dadurch gekennzeichnet, dass** die Auswerteschaltung (8) einen Taktgeber zur Vorgabe von Referenzzeiten aufweist, wobei der Taktgeber von einem Quarzoszillator gebildet ist, der als Systemtakt eine periodische Folge von Pulsen generiert und die Referenzzeiten ganzzahlige Vielfache der Periode des Systemtakts sind, dass nach Bestimmen der die Laufzeit repräsentierenden Messspannung durch erste Betätigungen der Schaltmittel ein Ladevorgang des kapazitiven Elements für eine erste durch den Taktgeber vorgegebene Referenzzeit, die kleiner als die Laufzeit ist, durchgeführt wird, wodurch eine erste Referenzspannung erhalten wird, und durch zweite Betätigungen der Schaltmittel ein Ladevorgang des kapazitiven Elements für eine zweite durch den Taktgeber vorgegebene Referenzzeit, die größer als die Laufzeit ist, durchgeführt wird, wobei die Differenz der ersten Referenzzeit und der Laufzeit sowie der zweiten Referenzzeit und der Laufzeit kleiner sind als eine Periode des Systemtakts, und dass durch Interpolation der Referenzzeiten und Referenzspannungen für die Messspannung der genaue Wert der Laufzeit bestimmt wird.

2.    Optischer Sensor nach Anspruch 1, **dadurch gekennzeichnet, dass** das kapazitive Element ein Kondensator (13) ist, und dass der Ladevorgang ein Aufladen des Kondensators (13) ist.

3.    Optischer Sensor nach Anspruch 2, **dadurch gekennzeichnet, dass** eine spannungsgesteuerte Stromquelle (10) vorgesehen ist, mittels derer ein Strom zum Laden des Kondensators (13) vorgegeben wird.

**4.** Optischer Sensor nach einem der Ansprüche 1 bis 3, **dadurch gekennzeichnet, dass** eine Schwellwerteinheit vorgesehen ist, mittels derer wenigstens ein Schwellwerts generiert wird, wobei mit dem Schwellwert die Amplitude der vom Sender (3) emittierten und auf den Empfänger (4) auftreffenden Lichtimpulse (2) verglichen werden, und dass die Schaltmittel betätigt werden, wenn die den Amplituden der Lichtimpulse (2) entsprechenden Spannungspegel oberhalb des Schwellwerts liegen.

**5.** Optischer Sensor nach einem der Ansprüche 1 bis 4, **dadurch gekennzeichnet, dass** der Empfänger (4) von einer Avalanche-Photodiode gebildet ist, und dass die Durchbruchspannung der Avalanche-Photodiode während der Messungen zur Bestimmung der Referenzzeit bestimmt wird.

**6.** Optischer Sensor nach Anspruch 5, **dadurch gekennzeichnet, dass** während der Messungen zur Bestimmung der Referenzzeit der Sender (3) ausgeschaltet ist, und dass zur Bestimmung der Durchbruchspannung die Eingangsspannung der Avalanche-Photodiode solange erhöht wird, bis deren Ausgangsspannung einen Schwellwert überschreitet, wobei der Schwellwert durch die Schwellwerteinheit generiert wird.

**7.** Optischer Sensor nach Anspruch 6, **dadurch gekennzeichnet, dass** ein Zähler vorgesehen ist, mit dem die Anzahl der Schwellwertüberschreitungen gezählt wird, und dass ein Durchbruch der Avalanche-Photodiode als erkannt gilt, wenn die Zahl der Schwellwertüberschreitungen einen vorgegebenen Wert überschreitet.

**8.** Optischer Sensor nach einem der Ansprüche 5 bis 7, **dadurch gekennzeichnet, dass** der Arbeitspunkt der Avalanche-Photodiode in Abhängigkeit der bestimmten Durchbruchsspannung selbsttätig einstellbar ist.

**9.** Optischer Sensor nach einem der Ansprüche 1 bis 8, **dadurch gekennzeichnet, dass** die Auswerteschaltung (8) eine Rechnereinheit aufweist, in welcher die ermittelten Laufzeiten in Distanzwerte umgerechnet werden.

**10.** Optischer Sensor nach einem der Ansprüche 1 bis 9, **dadurch gekennzeichnet, dass** zumindest Teile der Auswerteschaltung (8) in einem ASIC implementiert sind.


**Claims**

**1.** Optical sensor with a transmitter emitting light pulses, a receiver receiving light pulses and an evaluating circuit, by means of which the distance to an object to be detected is determined from the transit time of a light pulse to this object, wherein the evaluating circuit comprises switching means and a capacitive element, wherein on emission of a light pulse the switching means are actuated and a charging process of the capacitive element triggered and this charging process is ended by fresh actuation of the switching means, and wherein the measurement voltage obtained by this charging process is evaluated as a measure for the object distance, **characterised in that** the evaluating circuit (8) comprises a clock pulse transmitter for presetting reference times, wherein the clock pulse transmitter is formed by a quartz oscillator which generates a periodic train of pulses as system clock pulse and the reference times are integral multiples of the periods of the system clock pulse, that after determination of the measurement voltage representing the transmit time a charging process of the capacitive element for a first reference time, which is predetermined by the clock pulse transmitter and which is smaller than the transit time, is carried out by first actuations of the switching means, whereby a first reference voltage is obtained, and a charging process of the capacitive element for a second reference time, which is predetermined by the clock pulse transmitter and which is greater than the transit time, is carried out by second actuations of the switching means, wherein the difference of the first reference time and the transit time as well as the difference of the second reference time and the transit time are smaller than one period of the system clock pulse and that the precise value of the transit time is determined by interpolation of the reference times and reference voltages for the measurement voltage.

**2.** Optical sensor according to claim 1, **characterised in that** the capacitive element is a capacitor (13) and that the charging process is a charging up of the capacitor (13).

**3.** Optical sensor according to claim 2, **characterised in that** a voltage-controlled current source (10) is provided, by means of which a current for charging the capacitor (13) is predetermined.

**4.** Optical sensor according to any one of claims 1 to 3, **characterised in that** a threshold value unit is provided, by means of which at least one threshold value is generated, wherein the amplitudes of the light pulses (2) emitted by the transmitter (3) and incident on the receiver (4) are compared with the threshold value and that the switching means are actuated if the voltage level corresponding with the amplitudes of the light pulses (2) lie above the threshold value.

5. Optical sensor according to any one of claims 1 to 4, **characterised in that** the receiver (4) is formed by an avalanche photodiode and that the breakdown voltage of the avalanche photodiode is determined during the measurements for determination of the reference time.

6. Optical sensor according to claim 5, **characterised in that** during the measurements for determination of the reference time the transmitter (3) is switched off and that for determination of the breakdown voltage the input voltage of the avalanche photodiode is increased until the output voltage thereof exceeds a threshold value, wherein the threshold value is generated by the threshold value unit.

7. Optical sensor according to claim 6, **characterised in that** a counter is provided, by which the number of times the threshold value is exceeded is counted and that a breakdown of the avalanche photodiode is recognised when the number of times the threshold value has been exceeded exceeds a predetermined value.

8. Optical sensor according to any one of claims 5 to 7, **characterised in that** the working point of the avalanche photodiode is automatically settable in dependence on the determined breakdown voltage.

9. Optical sensor according to any one of claims 1 to 8, **characterised in that** the evaluating circuit (8) comprises a computer unit in which the determined transit times are recalculated into distance values.

10. Optical sensor according to any one of claims 1 to 9, **characterised in that** at least parts of the evaluating circuit (8) are implemented in an ASIC.

## Revendications

1. Capteur optique avec un émetteur émettant des impulsions lumineuses, un récepteur recevant des impulsions lumineuses et un circuit d'évaluation au moyen duquel la distance à un objet est déterminée à partir du temps de parcours d'une impulsion lumineuse vers un objet à détecter, le circuit d'évaluation présentent des moyens de commutation et un élément capacitif, les moyens de commutation étant actionnés lors de l'émission d'une impulsion lumineuse et déclenchant une charge de l'élément capacitif, laquelle charge est arrêtée par un nouvel actionnement du moyen de commutation, et la tension de mesure obtenue par cette charge étant évaluée comme mesure de la distance de l'objet, **caractérisé en ce que** le circuit d'évaluation (8) présente un générateur d'horloge pour prescrire des temps de référence, le générateur d'horloge étant formé par un oscillateur à quartz qui génère une suite périodique d'impulsions servant d'horloge système et les temps de référence étant des multiples entiers de la période de l'horloge système, qu'après détermination de la tension de mesure représentant le temps de parcours, une charge de l'élément capacitif pendant un premier temps de référence prescrit par le générateur d'horloge, qui est plus petit que le temps de parcours, est effectuée par de premiers actionnements des moyens de commutation, de sorte qu'une première tension de référence est obtenue, et une charge de l'élément capacitif pendant un deuxième temps de référence prescrit par le générateur d'horloge, qui est plus grand que le temps de parcours, est effectuée par de deuxièmes actionnements des moyens de commutation, la différence entre le premier temps de référence et le temps de parcours ainsi que celle entre le deuxième temps de référence et le temps de parcours étant plus petites qu'une période de l'horloge système, et que la valeur exacte du temps de parcours est déterminée par interpolation des temps de référence et des tensions de référence pour la tension de mesure.

2. Capteur optique selon la revendication 1, **caractérisé en ce que** l'élément capacitif est un condensateur (13) et que la charge consiste à charger le condensateur (13).

3. Capteur optique selon la revendication 2, **caractérisé en ce qu'**une source de courant commandée en tension (10) est prévue, au moyen de laquelle un courant pour charger le condensateur (13) est prescrit.

4. Capteur optique selon une des revendications 1 à 3, **caractérisé en ce qu'**une unité à valeur seuil est prévue, au moyen de laquelle au moins une valeur seuil est générée, l'amplitude des impulsions lumineuses (2) émises par l'émetteur (3) et qui atteignent le récepteur (4) étant comparée avec la valeur seuil, et que les moyens de commutation sont actionnés quand les niveaux de tension qui correspondent aux amplitudes des impulsions lumineuses (2) se situent au-dessus de la valeur seuil.

**5.** Capteur optique selon une des revendications 1 à 4, **caractérisé en ce que** le récepteur (4) est formé par une photodiode à avalanche, et que la tension de claquage de la photodiode à avalanche est déterminée pendant les mesures visant à déterminer le temps de référence.

**6.** Capteur optique selon la revendication 5, **caractérisé en ce que** l'émetteur (3) est désactivé pendant les mesures visant à déterminer le temps de référence, et que pour déterminer la tension de claquage, la tension d'entrée de la photodiode à avalanche est augmentée jusqu'à ce que sa tension de sortie dépasse une valeur seuil, laquelle valeur seuil est générée par l'unité à valeur seuil.

**7.** Capteur optique selon la revendication 6, **caractérisé en ce qu'**un compteur est prévu, au moyen duquel le nombre de dépassements de valeur seuil est compté, et qu'un claquage de la photodiode à avalanche est considéré comme détecté quand le nombre de dépassements de valeur seuil dépasse une valeur prédéfinie.

**8.** Capteur optique selon une des revendications 5 à 7, **caractérisé en ce que** le point de fonctionnement de la photodiode à avalanche est réglable automatiquement en fonction de la tension de claquage déterminée.

**9.** Capteur optique selon une des revendications 1 à 8, **caractérisé en ce que** le circuit d'évaluation (8) présente une unité de calcul dans laquelle les temps de parcours déterminés sont convertis en valeurs de distance.

**10.** Capteur optique selon une des revendications 1 à 9, **caractérisé en ce qu'**au moins des parties du circuit d'évaluation (8) sont implémentées dans un ASIC.

**Fig. 1**

**Fig. 2**

# Fig. 3

# Fig. 4

Spannung am Kondensator

$t_{cal} 1$    $t_{cal} 2$

$t_{Mess}$    Pulslaufzeit

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4464048 A
- US 5644261 A